# EUROPÄISCHE PATENTSCHRIFT

(11) **EP 3 017 522 B1**
(45) Veröffentlichungstag und Bekanntmachung des Hinweises auf die Patenterteilung: **22.05.2019**
(21) Anmeldenummer: 14734742.1
(22) Anmeldetag: 27.06.2014
(51) Int. Cl.: H02J 7/00, H02H 9/00, A62B 18/00

(54) **ELEKTRONISCHE SCHALTUNG EINES AKKUMULATORS, AKKUMULATOR, GEBLÄSEFILTERGERÄT SOWIE EIN VERFAHREN ZUM AUFLADEN EINES AKKUMULATORS EINES GEBLÄSEFILTERGERÄTES**
ELECTRONIC CIRCUIT OF A RECHARGEABLE BATTERY, RECHARGEABLE BATTERY, FAN FILTER DEVICE, AND METHOD FOR CHARGING A RECHARGEABLE BATTERY OF A FAN FILTER DEVICE
CIRCUIT ÉLECTRONIQUE D'UN ACCUMULATEUR, ACCUMULATEUR, APPAREIL DE FILTRATION À VENTILATION ET PROCÉDÉ PERMETTANT DE CHARGER UN ACCUMULATEUR D'UN APPAREIL DE FILTRATION À VENTILATION

(30) Priorität: 05.07.2013 DE 102013011251
(43) Veröffentlichungstag der Anmeldung: 11.05.2016
(73) Patentinhaber: Dräger Safety AG & Co. KGaA, 23560 Lübeck (DE)
(72) Erfinder: VOLMER, Achim, Dr., 23628 Krummesse (DE); SÜRIG, Andreas, 23628 Krummesse (DE)
(74) Vertreter: Mildner, Volker
(86) Internationale Anmeldenummer: PCT/EP2014/001762
(87) Internationale Veröffentlichungsnummer: WO 2015/000568

(56) Entgegenhaltungen:
- EP-A1- 1 868 274
- EP-A2- 0 954 081
- DE-A1- 2 808 963

## Beschreibung

Die vorliegende Erfindung betrifft eine elektronische Schaltung zur Aufladung eines Akkumulators eines Gebläsefiltergerätes, welcher von einer externen elektrischen Energiequelle mit Energie versorgt werden kann. Ferner betrifft die Erfindung einen Akkumulator eines Gebläsefiltergerätes, ein Gebläsefiltergerät mit einem Akkumulator sowie ein Verfahren zur Aufladung eines Akkumulators eines Gebläsefiltergerätes.

Gebläsefiltersysteme werden für den leichten und mittleren Atemschutzes eingesetzt und unterstützen den Anwender von Atemschutzfiltern indem sie den Atemwiderstand im Gegensatz zu konventionellen Gasmasken herabsetzten und so eine lange ermüdungsfreie Anwendung möglich machen. Ein Gebläsefiltersystem besteht aus folgenden Hauptkomponenten: Einem meist am Gürtel getragenes Gebläsefiltergerät und einem Kopfstück, das als Haube oder Maske ausgeführt ist. Diese beiden Komponenten sind meist über einen Verbindungsschlauch miteinander verbunden. Die kontaminierte Luft wird mittels des Gebläsefiltergeräts durch einen Filter angesaugt, wodurch sie von schädlichen Stoffen befreit wird. Anschließend wird die gereinigte Luft über den Verbindungsschlauch zum Kopfstück geleitet und dem Atemschutzträger zugeführt.

Das Gebläsefiltergerät weist unter anderem eine Gebläseeinheit mit einem durch einen Motor angetriebenen Lüfterrad und mit einem (Spiral-) Gehäuse auf. Die Energie für die Gebläseeinheit wird meistens durch einen Akkumulator bereitgestellt. Zusätzlich weist das Gebläsefiltergerät eine zentrale Steuereinheit auf, die den Motor der Gebläseeinheit steuert und Eingaben des Anwenders verarbeiten kann. Ein Gehäuse umschließt im Allgemeinen die Gebläseeinheit, die Steuereinheit und den Akkumulator. An das Gehäuse kann mindestens ein Filter angeschlossen werden.

Gebläsefiltersysteme werden unter sehr unterschiedlichen Umgebungsbedingungen eingesetzt. Dies kann auch Situationen mit potentiell explosionsfähigen Gasen oder Stäuben umfassen, die besondere Ansprüche an die verwendeten Komponenten stellen. Beim Explosionsschutz müssen zwei Gründe für eine potentielle Zündung ausgeschlossen werden: Zum einen die Funkenentzündung, zumeist durch die Begrenzung der im Fehlerfall frei werdenden Energie verhindert, und zum anderen eine Temperaturbegrenzung, die die Selbstentzündung ausschließt.

Wird am Akkumulator oder dem Gebläsefiltergerät eine Buchse zur Aufladung des Akkumulators vorgesehen, so muss diese zur Vermeidung von Funken- oder Glimmzündungen spannungslos geschaltet werden. Dies erfolgt üblicherweise durch den Einsatz von Seriendioden, die je nach benötigter Fehlertoleranz einfach oder doppelt redundant ausgelegt werden. So ergibt sich am Aufladeanschluss eine Reihenschaltung von 1 bis 3 Dioden, die vom Ladestrom durchflossen werden.

Für Benutzer von Gebläsefiltergeräten sind kurze Aufladezeiten von Vorteil, um eine möglichst gute Nutzung eines Gebläsefiltersystems zu erreichen. Dazu ist es erforderlich entsprechend hohe Ladeströme zu applizieren. Gebläsefiltergeräte haben oft Akkumulatoren beziehungsweise Akkumulatorpacks bestehend aus einer oder mehreren Zellen mit einem Energiegehalt von 50 - 70 Wh. Nimmt man eine üblich Spannung von 14,4 V an, entspricht dieses etwa 3,5 - 5 Ah. Soll in einer Stunde geladen werden, muss im Mittel ein Strom von 3,5 - 5 A über eine Stunde lang appliziert werden.

Der Nachteil, der sich durch die bekannten Lösungen mit Reihenschaltung von 1-3 Dioden in der Aufladeschaltung ergibt, liegt in der bei der Aufladung in den Dioden umgesetzten Verlustleistung. Diese beträgt im oben genannten Szenario zwischen 2,5 und 7,5 W. Diese großen Wärmemengen können zu Schädigungen des Akkumulators beziehungsweise des Akkumulatorpacks führen und sind daher nicht implementierbar.

In der DE 10 2005 059 571 A1 ist eine elektrische Schaltung offenbart, die es möglich macht, in einem Kleingerät, wie einer Zahnbürste, einen Akkumulator induktiv zu laden. Die Schaltung enthält eine Ladeschaltung zum Aufladen eines Akkumulators, die eine Ladespule zum Erzeugen eines Wechselstroms und eine Gleichrichterdiode aufweist, wobei der Ackumulator mit der Gleichrichterdiode und der Ladespule in Reihe geschaltet ist. Akkumulatoren für Gebläsefiltergeräte lassen jedoch wegen des schlechten Wirkungsgrades der Energieübertragung nur schwer induktiv laden.

Aus dem Dokument EP 0 954 081 A2 ist eine Ladeschaltung bekannt, die in Abhängigkeit eines gemessenen Ladestroms einen Schalter ein- bzw. ausschaltet, sodass die Verteilung eines Ladestroms in Abhängigkeit der Schalterstellung durch den Schalter und/oder eine dazu parallel geschaltete Diode fließt. Die Diode ist vorgesehen, um einen Rückstrom von einer Batterie zu einem Wechselstromadapter zu verhindern.

Aus dem Dokument EP 1 868 274 A1 ist ein Akkumulatorpack mit einer Schutzschaltung bekannt. Mehrfach in Reihe geschaltete Parallelschaltungen, bei denen die Dioden gegensinnig in Reihe geschaltet sind, bilden eine Auflade- und eine Entlade-Steuerung.

Das Dokument DE 28 08 963 A1 zeigt einen Staubschutzhelm mit einem elektrisch betriebenen Ventilator und einer Stromquelle. Als Stromquelle werden wiederaufladbare Batterien verwendet.

Es ist Aufgabe der vorliegenden Erfindung, die voranstehend beschriebenen Nachteile bei der Aufladung eines Akkumulators beziehungsweise eines Akkumulatorpacks für ein Gebläsefiltergerät zumindest teilweise zu beheben. Insbesondere ist es Aufgabe der vorliegenden Erfindung, eine elektronische Schaltung zur Aufladung eines Akkumulators oder eines Akkumulatorpacks, einen Akkumulator beziehungsweise ein Akkumulatorpack mit elektronischer Schaltung zur Aufladung, ein Gebläsefiltergerät mit Akkumulator und elektronischer Schaltung zur Aufladung sowie ein Verfahren zum Aufladen eines Akkumulators eines Gebläsefiltergerätes zur Verfügung zu stellen, welche in kostengünstiger und einfacher Weise eine schnelle und schädigungsfreie Aufladung des Akkumulators beziehungsweise des Akkumulatorpacks des Gebläsefiltergerätes ermöglichen.

Voranstehende Aufgabe wird gelöst durch eine elektronische Schaltung mit den Merkmalen des Anspruchs 1, einen Akkumulator mit den Merkmalen des Anspruchs 4, durch ein Gebläsefiltergerät mit den Merkmalen des Anspruchs 7 sowie durch ein Verfahren zum Aufladen eines Akkumulators eines Gebläsefiltergerätes mit den Merkmalen des Anspruchs 9. Weitere Details der Erfindung ergeben sich aus den Unteransprüchen, der Beschreibung und den Zeichnungen. Dabei gelten Merkmale und Details, die im Zusammenhang mit der erfindungsgemäßen elektronische Schaltung beschrieben sind, selbstverständlich auch im Zusammenhang mit dem erfindungsgemäßen Akkumulator, dem erfindungsgemäßen Gebläsefiltergerät und dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Gemäß einem ersten Aspekt der Erfindung wird die Aufgabe durch eine elektronische Schaltung zur Aufladung eines Akkumulators eines Gebläsefiltergerätes, welcher von einer externen elektrischen Energiequelle mit Energie versorgt werden kann, gelöst. Die elektronische Schaltung ist derart ausgebildet, dass sie einen ersten Ladeanschluss, der über eine erste elektrische Leitung mit einem Pluspol des Akkumulators verbindbar ist, und einen zweiten Ladeanschluss, der über eine zweite elektrische Leitung mit einem Minuspol des Akkumulators verbindbar ist, aufweist. Ferner ist die elektronische Schaltung dadurch gekennzeichnet, dass in der ersten Leitung oder in der zweiten Leitung mehrere in Reihe geschaltete Parallelschaltungen, jeweils aus einem als Diode ausgestalten Widerstandselement und einem Schaltelement, angeordnet sind, wobei jede Diode derart eingerichtet ist, dass während der Aufladung des Akkumulators zumindest ein Teil des, zugehörigen Ladestroms die Diode in Durchlassrichtung durchfließt,

Die elektronische Schaltung ist derart ausgebildet, dass die elektrische Schaltung eine Messvorrichtung umfasst, die ausgebildet ist, einen Ladestrom durch eine der Leitungen oder eine Spannung zwischen den Ladeanschlüssen zu messen und dass zwischen den Schalelementen und der Messvorrichtung zumindest eine Steuerelektronik vorgesehen ist, die zur Überwachung des Stromflusses durch die Leitungen ausgebildet ist. Dazu kann das Messsignal, also zu dem Ladestrom oder der Spannung, der Messvorrichtung von der Steuerelektronik empfangen werden. Des Weiteren ist die Steuereinheit derart ausgebildet, dass sie bei einem Fehlen eines Ladestroms die Schaltelemente hochohmig oder auf geöffnet schaltet, und die Steuerelektronik ist derart ausgebildet, dass sie bei Vorhandensein eines Ladestroms die Schaltelemente niederohmig oder auf geschlossen schaltet. D.h., beim Anliegen einer Ladespannung an den Ladeanschlüssen und einem damit einhergehenden Ladestrom wird die Schaltelemente derart geschaltet, dass der Ladestrom voll durchgeschaltet wird. Das heißt, der Ladestrom fließt durch die elektrischen Leitungen, das niederohmig oder auf geschlossen geschaltete Schaltelemente und den Akkumulator, wodurch die Verlustleistung an den Schaltelementen vernachlässigbar wird.

Die Schaltelemente können in der sogenannten (+)-Leitung, also der ersten Leitung, oder in der sogenannten (-)-Leitung, also der zweiten Leitung, angeordnet sein. Die Messvorrichtung ist vorzugsweise in der Leitung angeordnet, in der nicht die Schaltelemente angeordnet sind. Es ist aber auch denkbar in einer alternativen Ausführung der Schaltung, dass die Messvorrichtung in derselben Leitung angeordnet ist, wie die Schaltelemente. Sind zwei oder mehr Schaltelemente in Reihe zueinander geschaltet vorgesehen, kann zwischen jedem Schaltelement und der Messvorrichtung jeweils eine Steuerelektronik angeordnet sein. Hierdurch ist jedes Schaltelement durch eine eigene Steuerelektronik ansteuerbar.

Durch eine derartig ausgebildete elektronische Schaltung kann in kostengünstiger und einfacher Weise eine schnelle und schädigungsfreie Aufladung eines Akkumulators eines Gebläsefiltergerätes ermöglicht werden.

Die elektronische Schaltung kann an den Akkumulator, insbesondere den Pluspol und den Minuspol des Akkumulators angeschlossen werden. Vorzugsweise ist die elektronische Schaltung Teil des Akkumulators, das heißt dauerhaft mit diesem verbunden. Eine erste elektrische Leitung der elektronischen Schaltung ist mit dem Pluspol des Akkumulators verbunden und stellt somit über den ersten Ladeanschluss eine Verlängerung des Pluspols des Akkumulators dar. Eine zweite elektrische Leitung der elektronischen Schaltung ist mit dem Minuspol des Akkumulators verbunden und stellt somit über den zweiten Ladeanschluss eine Verlängerung des Minuspols des Akkumulators dar.

In der ersten oder in der zweiten elektrischen Leitung sind je nach benötigter Fehlertoleranz wenigstens eine Parallelschaltung aus einem Widerstandselement, insbesondere eine Diode oder ein elektrischer Widerstand mit mindestens 1 Kiloohm, und einem Schaltelement angeordnet, die jeweils über eine Steuerelektronik mit einer Messvorrichtung in der ersten oder zweiten elektrischen Leitung verbunden sind. Über das wenigstens eine Schaltelement werden die offenen Kontakte des Akkumulators spannungsfrei geschaltet, um den Stromfluss zu unterbinden, wenn keine externe elektrische Energiequelle an den Ladeanschlüssen der elektrischen Leitungen angeschlossen ist und der Akkumulator nicht aufgeladen wird. Beim Laden des Akkumulators, das heißt, wenn eine externe elektrische Energiequelle an den Ladeanschlüssen der elektrischen Leitungen der elektronischen Schaltung angeschlossen ist, werden die Kontakte des Akkumulators durch die wenigstens eine Parallelschaltung, die von der Steuerelektronik angesteuert wird, niederohmig geschaltet, wobei die wenigstens eine Parallelschaltung praktisch keine Verlustleistung umsetzt.

Das Kriterium zum Einschalten der Parallelschaltungen beziehungsweise der Schaltelemente ist vorzugsweise nicht die Differenzspannung über den Schaltelementen, sondern die Stromrichtung. So werden die Schaltelemente eingeschaltet, sobald der über die Schaltelement fließende Strom zum Laden des Akkupacks zu fließen beginnt.

Diese Lösung der elektronischen Schaltung bietet den Vorteil, dass bei gleichzeitiger Verwendung der Akkumulatorkontakte (Minus- und Pluspol) zum Laden und Entladen eine Strombegrenzung durch dieselbe Elektronik, das heißt die wenigstens eine Parallelschaltung aus einem Widerstandselement und einem Schaltelement und die Stromauswertung durch die zumindest eine Steuerelektronik, einfach implementierbar ist. Hierbei kann die wenigstens eine Parallelschaltungen beziehungsweise das wenigstens eine Schaltelement ein Verhalten einer sehr schnellen Überstromsicherung umsetzen.

Wird eine externe elektrische Energiequelle, das heißt ein Ladegerät, an die Ladeanschlüsse der elektronischen Schaltung angeschlossen, so fließt im ersten Moment der Ladestrom über das Widerstandselement, das insbesondere als Diode, insbesondere als intrinsische Diode, oder als elektrischer Widerstand ausgebildet ist. Dadurch ergibt sich ein Spannungsabfall an der Messvorrichtung, der durch die zumindest eine Steuerelektronik ausgewertet wird. Die Messvorrichtung ist vorzugsweise ein niederohmiger elektrischer Widerstand, der zur Messung des elektrischen Stromes verwendet wird. Der Strom, der durch die Messvorrichtung fließt, verursacht einen zu ihm proportionalen Spannungsabfall, der gemessen wird. Von der elektronischen Schaltung wird im Falle eines Spannungsabfalls an der Messvorrichtung die Ladung des Akkumulators detektiert und das Schaltelement durchgeschaltet. An der wenigstens einen Parallelschaltung beziehungsweise dem wenigstens einen Schaltelement wird von nun an nur noch eine minimale Verlustleistung umgesetzt. So ist an der Parallelschaltung beziehungsweise dem Schaltelement eine Verlustleistung von weniger als ca. 250 mW erreichbar, die nicht zu einer Schädigung des Akkumulators führt, währenddessen bei den elektronischen Schaltungen des zuvor beschriebenen Standes der Technik Verlustleistungen zwischen 2,5 und 7,5 W erreicht wurden. Durch diese Verringerung der Verlustleistung an der Parallelschaltung beziehungsweise dem Schaltelement, produziert die Parallelschaltung beziehungsweise das Schaltelement deutlich weniger Wärme, so dass es nicht zu Beschädigungen des Akkumulators kommen kann. Insbesondere kann ein Akkumulator bei Verwendung einer derartigen elektronischen Schaltung mit einem deutlich höheren Ladestrom und damit mit einer gewünschten verkürzten Aufladezeit aufgeladen werden, da die Verlustleistung an den Parallelschaltungen beziehungsweise den Schaltelementen gering gehalten werden kann.

Gemäß einer besonders bevorzugten Weiterbildung der Erfindung kann bei einer elektronischen Schaltung vorgesehen sein, dass das Schaltelement einer Parallelschaltung ein Mos-FET ist. Ein Mos-FET hat die Eigenschaft, dass er den Strom nur in eine Richtung schalten und sperren kann. Ein Mos-FET befindet sich immer im Sperr-Zustand, wenn keine positive Spannung zwischen dem Gate- und dem Source-Anschluss des Mos-FET anliegt. Das heißt, ist kein Ladegerät an die Ladeanschlüsse der elektronischen Schaltung angeschlossen, sperrt der Mos-FET und schaltet die Ladeanschlüsse hochohmig und damit spannungslos. Wird ein Ladegerät angeschlossen, so fließt im ersten Moment der Strom über die intrinsische Diode des Mos-FETs. Das heißt der wenigstens eine Mos-FET wird eingeschaltet, sobald der über die intrinsische Diode des Mos-FETs fließende Strom zum Laden des Akkupacks zu fließen beginnt.

Eine derartig ausgebildete elektronische Schaltung bietet den Vorteil, dass bei gleichzeitiger Verwendung der Akkumulatorkontakte zum Laden und Entladen eine Strombegrenzung durch dieselbe Elektronik, das heißt den Mos-FET und der Stromauswertung durch die Steuerelektronik, einfach implementierbar wird. Hierbei kann der wenigstens eine Mos-FET zusätzlich ein Verhalten einer sehr schnellen Überstromsicherung umsetzen.

Wird eine externe elektrische Energiequelle, das heißt ein Ladegerät, an die Ladeanschlüsse der elektronischen Schaltung angeschlossen, so fließt im ersten Moment der Ladestrom über den wenigstens einen Mos-FET. Dadurch ergibt sich ein Spannungsabfall an der Messvorrichtung, der durch die Steuerelektroniken ausgewertet wird. Dabei wird im Falle eines Spannungsabfalls die Ladung des Akkumulators detektiert und der Mos-FET durchgeschaltet. An dem Mos-FET wird von nun an nur noch eine minimale Verlustleistung umgesetzt. Mos-FETs erreichen Einschaltwiderstände beziehungsweise einen minimalen Durchgangswiderstand von wenigen mΩ. Nimmt man beispielsweise für einen derartigen Wert 10 mΩ an, so ergibt sich bei einem Ladestrom von 5A nur noch eine Verlustleistung von 250 mW, die zu keiner Schädigung des Akkumulators des Gebläsefiltergerätes führen.

Da die intrinsischen Dioden der Mos-FETs einen Spannungsabfall in der gleichen Größenordnung wie konventionelle Lösungen aufweisen, kann bei Versagen der Steuerelektroniken eine große Verlustleistung umgesetzt werden. Damit die Zellen des Akkumulators im Fehlerfall durch zu großen Wärmeeintrag nicht zur Explosion gebracht werden, ist der Mos-FET vorzugsweise durch eine zusätzliche thermisch gekoppelte Temperatursicherung geschützt, die bei zu großer Erwärmung den Stromkreis öffnet. Daher ist ferner eine elektronische Schaltung bevorzugt, bei der in der ersten oder in der zweiten Leitung, insbesondere zwischen zwei Schaltelementen, eine thermisch gekoppelte Temperatursicherung geschaltet ist.

Gemäß einem zweiten Aspekt der Erfindung wird die Aufgabe durch einen Akkumulator eines Gebläsefiltergerätes aufweisend eine elektronische Schaltung zur Aufladung des Akkumulators, welcher von einer externen elektrischen Energiequelle mit Energie versorgt werden kann, gelöst. Der Akkumulator ist dadurch gekennzeichnet, dass die elektronische Schaltung gemäß dem ersten Aspekt der Erfindung, insbesondere nach einem der vorangegangenen Ansprüche 1 bis 3, ausgebildet ist. Damit bringt ein erfindungsgemäßer Akkumulator eines Gebläsefiltergerätes die gleichen Vorteile mit sich, wie sie ausführlich mit Bezug auf eine erfindungsgemäße elektronische Schaltung zur Aufladung eines Akkumulators eines Gebläsefiltergerätes erläutert worden sind. Ein Akkumulator, der eine erfindungsgemäße elektronische Schaltung aufweist, kann in kostengünstiger und einfacher Weise schnell und schädigungsfrei durch eine externe elektrische Energiequelle aufgeladen werden. Insbesondere ist bei einem derartigen Akkumulator sichergestellt, dass es während des Aufladevorgangs aufgrund der geringen Verlustleistung der wenigstens einen Parallelschaltung beziehungsweise des wenigstens einen Schaltelementes, insbesondere des wenigstens einen Mos-FETs, zu keiner Schädigung des Akkumulators kommt.

Bevorzugt ist ein Akkumulator, bei dem die elektronische Schaltung im Gebläsefiltergerät angeordnet ist. Das bedeutet, der Anschluss des Ladekabels erfolgt am Gebläsefiltergerät und nicht direkt am Akkumulator.

Besonders bevorzugt ist ein Akkumulator, der ein Akkumulatorpack mit mehreren in Reihe zueinander geschalteten Akkumulatoren aufweist. Ein Akkumulator mit einer erfindungsgemäßen elektronischen Schaltung kann schnell und sicher aufgeladen werden, ohne dass es zu einer Beschädigung des Akkumulatorpacks kommt. Insbesondere kann das Akkumulatorpack mit einem relativ hohen Ladestrom aufgeladen werden.

Ferner ist ein Akkumulator bevorzugt, der eine Schutzschaltung aufweist. Die Schutzschaltung bietet Schutz gegen Überspannung, Überstrom, Über- und Untertemperatur, Tiefentladung und Ungleichheit des Ladezustandes der in Reihe geschalteten Zellen und kann eine Maßnahme zur Sicherstellung der Gleichheit (balancing) darstellen.

Gemäß einem dritten Aspekt der Erfindung wird die Aufgabe durch ein Gebläsefiltergerät für ein Gebläsefiltersystem, aufweisend ein Akkumulator zur elektrischen Versorgung des Gebläsefiltergerätes, gelöst, wobei der Akkumulator vorzugsweise gemäß dem zweiten Aspekt der Erfindung, insbesondere nach einem der Ansprüche 4 bis 6, ausgebildet ist. Damit bringt ein erfindungsgemäßes Gebläsefiltergerät eines Gebläsefiltersystems die gleichen Vorteile mit sich, wie sie ausführlich mit Bezug auf eine erfindungsgemäße elektronische Schaltung zur Aufladung eines Akkumulators eines Gebläsefiltergerätes beziehungsweise einen Akkumulator eines Gebläsefiltergerätes erläutert worden sind.

Gemäß einem vierten Aspekt der Erfindung wird die Aufgabe durch ein Verfahren zum Aufladen eines Akkumulators eines Gebläsefiltergerätes mittels einer elektronischen Schaltung nach dem ersten Aspekt der Erfindung, insbesondere nach einem der Ansprüche 1 bis 3, gelöst, wobei das Verfahren durch folgende Verfahrensschritte gekennzeichnet ist:
a) wenn ein Fehlen eines Ladestroms ermittelt wird, wird das Schaltelement hochohmig oder auf geöffnet schaltet, und
b) wenn ein Vorhandensein eines Ladestroms ermittelt wird, wird das Schaltelement auf niederohmig oder auf geschlossen geschaltet.

Solange keine externe elektrische Energiequelle an den Ladeanschlüsse angeschlossen ist, sind die elektrischen Leitungen durch das wenigstens eine Schaltelement gesperrt, da das Schaltelement hochohmig oder auf geöffnet geschaltet und damit spannungslos geschaltet ist. Wird an den ersten Ladeanschluss und den zweiten Ladeanschluss eine externe elektrische Energiequelle angeschlossen, so dass ein Ladestrom durch das wenigstens eine Schaltelement fließt, wird der Spannungsabfall durch die Messvorrichtung gemessen und bei Feststellung eines Spannungsabfalls an der Messvorrichtung wird das Schaltelement durch die Steuerelektronik derart geschaltet, dass der Ladestrom zur Aufladung des Akkumulators voll durchgeschaltet wird und durch die elektrischen Leitungen, das niederohmig oder auf geschlossen geschaltete Schaltelement und den Akkumulator fließt.

Das erfindungsgemäße Verfahren zum Aufladen eines Akkumulators eines Gebläsefiltergerätes bringt daher die gleichen Vorteile mit sich, wie sie ausführlich mit Bezug auf eine erfindungsgemäße elektronische Schaltung zur Aufladung eines Akkumulators eines Gebläsefiltergerätes beziehungsweise einen Akkumulator eines Gebläsefiltergerätes erläutert worden sind.

Die elektronische Schaltung schaltet die Ladekontakte des Akkumulators nach außen spannungsfrei, wenn keine externe elektrische Energiequelle angeschlossen ist. Nach dem Anschließen einer externen elektrischen Energiequelle an die Ladeanschlüsse der elektronischen Schaltung werden die Schaltelemente und damit die Ladekontakte des Akkumulators niederohmig geschaltet und setzen somit praktisch keine Verlustleistung um. Das Schaltelement, insbesondere der Mos-FET, wird eingeschaltet bei Feststellung der zum Aufladen notwendigen Stromrichtung. Das heißt, die Halbleiterbauelemente werden eingeschaltet, sobald der über die Parallelschaltung, insbesondere die intrinsische Diode fließende Strom zum Laden des Akkumulators zu fließen beginnt. Das Verfahren bietet den Vorteil, dass bei gleichzeitiger Verwendung der Akkumulatorkontakte zum Laden und Entladen eine Strombegrenzung durch die wenigstens eine Parallelschaltung beziehungsweise das wenigstens eine Schaltelement, insbesondere den Mos-FET, und die Stromauswertung durch die Steuerelektronik implementierbar ist. Hierbei kann das wenigstens eine Schaltelement zusätzlich ein Verhalten einer sehr schnellen Überstromsicherung umsetzen.

Die voranstehende Erfindung wird näher erläutert anhand der beigefügten Zeichnungsfiguren. Es zeigen jeweils schematisch:
- Fig. 1: ein Gebläsefiltersystem, aufweisend ein Gebläsefiltergerät mit einem Akkumulator, ein Kopfstück sowie einen Verbindungsschlauch,
- Fig. 2: eine elektronische Schaltung eines Gebläsefiltergerät eines Gebläsefiltersystems, welche zum Aufladen eines Akkumulatorpacks des Gebläsefiltergeräts ausgebildet ist, und
- Fig. 3: eine weitere elektronische Schaltung eines Gebläsefiltergerät eines Gebläsefiltersystems, welche zum Aufladen eines Akkumulatorpacks des Gebläsefiltergeräts ausgebildet ist.

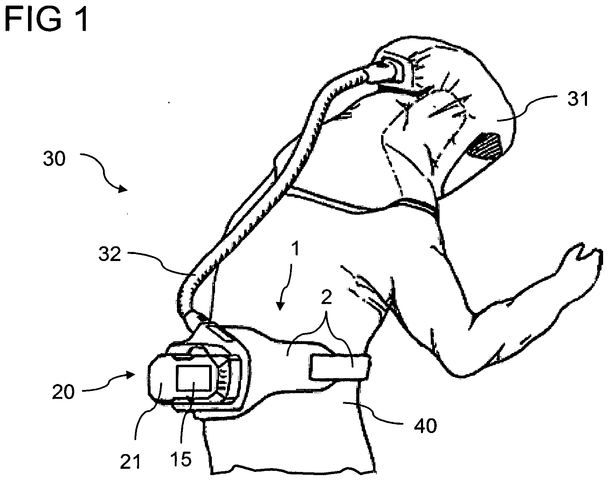

In Fig. 1 ist schematisch ein Gebläsefiltersystem 30, aufweisend ein Gebläsefiltergerät 20, ein Kopfstück 31 sowie einen Verbindungsschlauch 32, der das Gebläsefiltergerät 20 und das Kopfstück 31 fluidkommunizierend miteinander verbindet, dargestellt. Das Gebläsefiltergerät 20 ist an einem Tragesystem in Form eines Gürtels angeordnet, so dass ein unbeschwertes Tragen am Körper 40 des Anwenders in jedem Arbeitsumfeld möglich ist. Das Gebläsefiltergerät 20 weist ein Lüftergehäuse 21 auf, in dem ein Lüfterrad und zumindest ein Filter angeordnet sind. Ferner weist das Gebläsefiltergerät 20 eine Akkumulator 15 auf, der zum Betreiben des Gebläsefiltergeräts 20 dient.

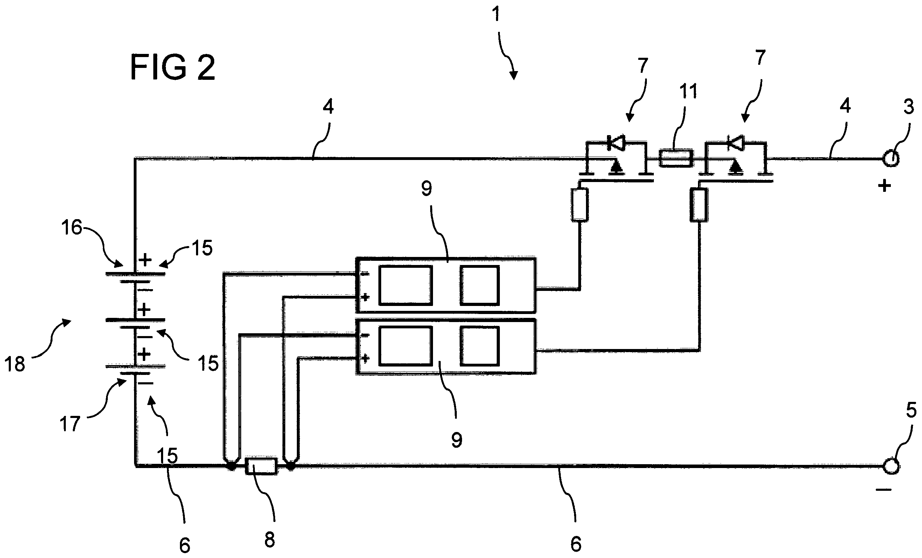

Fig. 2 zeigt schematisch eine elektronische Schaltung 1 eines Gebläsefiltergeräts 20 eines Gebläsefiltersystems 30, welche zum Aufladen eines Akkumulatorpacks 18 des Gebläsefiltergeräts 20 ausgebildet ist. Die elektronische Schaltung 1 ist an den Pluspol 16 beziehungsweise den Minuspol 17 des Akkumulatorpacks 18 angeschlossen. Der Akkumulatorpack 18 weist drei Akkumulatoren 15 beziehungsweise Zellen, die in Reihe geschaltet sind, auf.

Die elektronische Schaltung 1 weist einen ersten Ladeanschluss 3, der über eine erste elektrische Leitung 4 mit einem Pluspol 16 des Akkumulatorpacks 18 verbunden ist, und einen zweiten Ladeanschluss 5, der über eine zweite elektrische Leitung 6 mit einem Minuspol 17 des Akkumulatorpacks 18 verbunden ist, auf. In der ersten Leitung 4 sind zwei Parallelschaltungen 7, aufweisend Mos-FETs als Schaltelemente, in Reihe geschaltet angeordnet. In der zweiten Leitung 6 ist eine Messvorrichtung 8 angeordnet. Zwischen jedem der beiden Parallelschaltungen 7 und der Messvorrichtung 8 ist jeweils eine Steuerelektronik 9 elektrisch verbindend angeordnet, die zur Feststellung eines Spannungsabfalls an der Messvorrichtung 8 ausgebildet sind. Insbesondere können die Steuerelektroniken 9 durch Auswertung des Spannungsabfalls an der Messvorrichtung 8 erkennen, welche Stromrichtung vorliegt. Die Parallelschaltungen 7 sind derart ausgebildet, dass sie bei Fehlen eines Ladestroms an den Ladeanschlüssen 3, 5 die erste elektrische Leitung 4 sperren. Die Steuerelektroniken 9 sind derart ausgebildet, dass sie bei Feststellung einer negativen Differenzspannung an der Messvorrichtung 8 aufgrund eines Anliegens eines Ladestroms an den Ladeanschlüssen 3, 5 die Parallelschaltungen 7 derart schalten, dass ein Ladestrom durch die elektrischen Leitungen 4, 6 und damit den Akkumulatorpack 18 fließt.

Das heißt, der Akkumulatorpack 18 wird über die Ladeanschlüsse 3, 5 der Ladeschaltung 2 der elektronischen Schaltung 1 aufgeladen. Der Ladestrom wird über die vorzugsweise redundant ausgelegten Parallelschaltungen 7, insbesondere die gleich ausgebildeten Schaltelemente, insbesondere die Mos-FETs, geleitet. Ist keine externen elektrischen Energiequelle beziehungsweise Ladegerät angeschlossen, sperren die Schaltelemente der Parallelschaltungen 7 und schalten die Ladeanschlüsse 3, 5 hochohmig oder auf geöffnet und damit spannungslos. Wird ein Ladegerät angeschlossen, so fließt im ersten Moment der Ladestrom durch die Parallelschaltungen 7, insbesondere über die intrinsischen Dioden der Mos-FETs. Dadurch ergibt sich ein Spannungsabfall an der Messvorrichtung 8 der durch die Steuerelektroniken 9 ausgewertet wird. Dabei wird im Falle einer negativen Differenzspannung die Ladung des Akkumulatorpacks 18 detektiert und die Parallelschaltungen 7 beziehungsweise die Mos-FETs durchgeschaltet. An den Parallelschaltungen 7 wird dann nur noch eine minimale Verlustleistung umgesetzt. Weisen die Mos-FETs R_{DS(ON)}-Werte von wenigen mΩ, wie beispielsweise 10 mΩ auf, so ergibt sich bei einem Ladestrom von 5 A nur noch eine Verlustleistung von 250 mW, die zu keiner Schädigung des Akkumulatorpacks 18 führt. Damit die Akkumulatoren 15 beziehungsweise die Zellen des Akkumulatorpacks 18 im Fehlerfall durch zu großen Wärmeeintrag nicht zur Explosion gebracht werden können, sind die Parallelschaltungen 7, insbesondere die Mos-FETs, durch eine an diese thermisch gekoppelte Temperatursicherung 11 geschützt, die bei zu großer Erwärmung den Stromkreis öffnet. Die thermisch gekoppelte Temperatursicherung 11 ist in der ersten elektrischen Leitung 4 zwischen den beiden Parallelschaltungen 7 angeordnet. Wenn die Parallelschaltungen 7 gleich ausgebildet sind, kann die Toleranz gering gehalten werden.

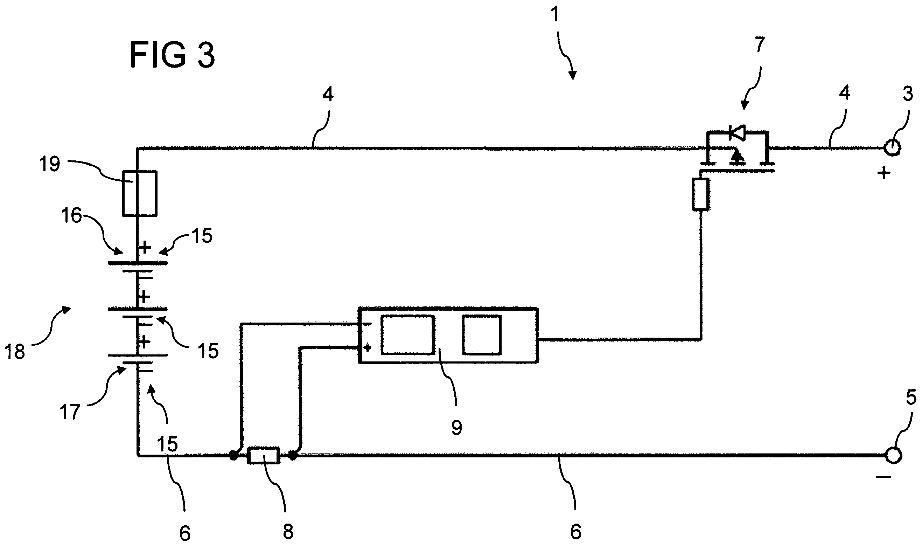

Fig. 3 zeigt schematisch eine weitere elektronische Schaltung 1 eines Gebläsefiltergeräts 20 eines Gebläsefiltersystems 30, welches zum Aufladen eines Akkumulatorpacks 18 des Gebläsefiltergeräts 20 ausgebildet ist. Im Unterschied zur elektronischen Schaltung 1 gemäß Fig. 2 weist die elektronische Schaltung 1 der Fig. 3 nur eine Parallelschaltung 7 aus einem Widerstandselement, insbesondere eine Diode oder ein elektrischer Widerstand mit mindestens 1 Megaohm, und einem Schaltelement auf. Entsprechend ist auch nur eine Steuerelektronik 9 zwischen der Messvorrichtung 8 und der Parallelschaltung 7 angeordnet. Ansonsten funktioniert die elektronische Schaltung 1 gemäß Fig. 3 wie die elektronische Schaltung 1 gemäß Fig. 2. Ferner kann das Akkumulatorpack 18 eine Schutzschaltung 19 aufweisen. Die Schutzschaltung bietet vorzugsweise Schutz gegen Überspannung, Überstrom, Über- und Untertemperatur, Tiefentladung und Ungleichheit des Ladezustandes der in Reihe geschalteten Zellen und kann eine Maßnahme zur Sicherstellung der Gleichheit darstellen.

### Bezugszeichenliste

- 1: elektronische Schaltung
- 3: erster Ladeanschluss
- 4: erste elektrische Leitung
- 5: zweiter Ladeanschluss
- 6: zweite elektrische Leitung
- 7: Parallelschaltung
- 8: Messvorrichtung
- 9: Steuerelektronik
- 11: Temperatursicherung, thermisch an Halbleiterbauelemente 7 gekoppelt

- 15: Akkumulator
- 16: Pluspol des Akkumulators
- 17: Minuspol des Akkumulators
- 18: Akkumulatorpack
- 19: Schutzschaltung

- 20: Gebläsefiltergerät
- 21: Lüftergehäuse

- 30: Gebläsefiltersystem
- 31: Kopfstück
- 32: Verbindungsschlauch

- 40: Körper

## Patentansprüche

1. Elektronische Schaltung (1) zur Aufladung eines Akkumulators (15) eines Gebläsefiltergerätes (20), welcher von einer externen elektrischen Energiequelle mit Energie versorgt werden kann, derart ausgebildet,
a) dass die elektronische Schaltung (1) einen ersten Ladeanschluss (3), der über eine erste elektrische Leitung (4) mit einem Pluspol (16) des Akkumulators (15) verbindbar ist, und einen zweiten Ladeanschluss (5), der über eine zweite elektrische Leitung (6) mit einem Minuspol (17) des Akkumulators (15) verbindbar ist, aufweist,
b) dass in der ersten Leitung (4) oder in der zweiten Leitung (6) mehrere in Reihe geschaltete Parallelschaltungen (7), jeweils aus einem als Diode ausgestalten Widerstandselement und einem Schaltelement, angeordnet sind, wobei jede Diode derart eingerichtet ist, dass während der Aufladung des Akkumulators zumindest ein Teil des zugehörigen Ladestroms die Diode in Durchlassrichtung durchfließt,
c) dass die elektrische Schaltung (1) eine Messvorrichtung umfasst, die ausgebildet ist, einen Ladestrom durch eine der Leitungen (4, 6) oder eine Spannung zwischen den Ladeanschlüssen (3, 5) zu messen,
d) dass zwischen den Schaltelementen und der Messvorrichtung zumindest eine Steuerelektronik (9) vorgesehen ist, die zum Empfang eines Messsignals der Messvorrichtung und zur Überwachung des Stromflusses durch die Leitungen (4, 6) ausgebildet ist,
e) dass die Steuerelektronik (9) derart ausgebildet ist, dass sie bei einem Fehlen eines Ladestroms die Schaltelemente hochohmig oder auf geöffnet schaltet, und
f) dass die Steuerelektronik (9) derart ausgebildet ist, dass sie bei Vorhandensein eines Ladestroms die Schaltelemente niederohmig oder auf geschlossen schaltet.

2. Elektronische Schaltung (1) nach einem der vorhergehenden Ansprüche, **dadurch gekennzeichnet, dass** jedes Schaltelement ein Mos-FET ist.

3. Elektronische Schaltung (1) nach einem der vorangegangenen Ansprüche, **dadurch gekennzeichnet, dass** in der ersten Leitung (4) oder der zweiten Leitung (6), insbesondere zwischen zwei Schaltelementen, eine thermisch gekoppelte Temperatursicherung (11) geschaltet ist.

4. Akkumulator (15) zur elektrischen Versorgung eines Gebläsefiltergerätes (20), welcher von einer externen elektrischen Energiequelle mit einer Ladespannung versorgt werden kann, der Akkumulator aufweisend eine elektronische Schaltung (1) zur Aufladung des Akkumulators (15), **dadurch gekennzeichnet, dass** die elektronische Schaltung (1) nach einem der vorangegangenen Ansprüche ausgebildet ist.

5. Akkumulator (15) nach Anspruch 4, **dadurch gekennzeichnet, dass** der Akkumulator (15) ein Akkumulatorpack (18) mit mehreren in Reihe zueinander geschalteten Akkumulatoren (15) ist.

6. Akkumulator (15) nach Anspruch 4 oder 5, **dadurch gekennzeichnet, dass** der Akkumulator (15) eine Schutzschaltung (19) aufweist.

7. Gebläsefiltergerät (20) für ein Gebläsefiltersystem (30), das Gebläsefiltergerät aufweisend ein Akkumulator (15) zur elektrischen Versorgung des Gebläsefiltergerätes (20), **dadurch gekennzeichnet, dass** der Akkumulator (15) nach einem der Ansprüche 4 bis 6 ausgebildet ist.

8. Gebläsefiltergerät (20) nach Anspruch 6, **dadurch gekennzeichnet, dass** die elektronische Schaltung (1) im Gebläsefiltergerät (20) angeordnet ist.

9. Verfahren zum Aufladen eines Akkumulators (15) eines Gebläsefiltergerätes (20) mittels einer elektronischen Schaltung (1) nach einem der vorangegangenen Ansprüche 1 bis 3, wobei das Verfahren durch folgende Verfahrensschritte **gekennzeichnet ist:**
a) wenn ein Fehlen eines Ladestroms ermittelt wird, werden die Schaltelemente hochohmig oder auf geöffnet schaltet, und
b) wenn ein Vorhandensein eines Ladestroms ermittelt wird, werden die Schaltelemente auf niederohmig oder auf geschlossen geschaltet.

## Claims

1. Electronic circuit (1) for charging a rechargeable battery (15) of a blower filter unit (20), which can be supplied with energy by an external electrical energy source, designed in such a way that
a) the electronic circuit (1) has a first charging connection (3), which can be connected to a positive pole (16) of the rechargeable battery (15) via a first electrical line (4), and a second charging connection (5), which can be connected to a negative pole (17) of the rechargeable battery (15) via a second electrical line (6),
b) a plurality of series-connected parallel circuits (7), each composed of a resistor element designed as a diode and a switch element, are arranged in the first line (4) or in the second line (6), wherein each diode is configured in such a way that at least some of the associated charging current flows through the diode in the forward direction during charging of the rechargeable battery,
c) the electrical circuit (1) comprises a measurement apparatus, which is designed to measure a charging current through one of the lines (4, 6) or a voltage between the charging connections (3, 5),
d) at least one control electronics system (9) is provided between the switching elements and the measurement apparatus, said control electronics system being designed to receive a measurement signal of the measurement apparatus and to monitor the flow of current through the lines (4, 6),
e) the control electronics system (9) is designed in such a way that it switches the switching elements in a high-impedance manner or to open in the absence of a charging current, and
f) the control electronics system (9) is designed in such a way that it switches the switching elements in a low-impedance manner or to closed in the presence of a charging current.

2. Electronic circuit (1) according to one of the preceding claims, **characterized in that** each switching element is a MOSFET.

3. Electronic circuit (1) according to either of the preceding claims, **characterized in that** a thermally coupled thermal fuse (11) is connected in the first line (4) or the second line (6), in particular between two switching elements.

4. Rechargeable battery (15) for supplying electrical power to a blower filter unit (20), which can be supplied with a charging voltage by an external electrical energy source, the accumulator having an electronic circuit (1) for charging the rechargeable battery (15), **characterized in that** the electronic circuit (1) is designed according to one of the preceding claims.

5. Rechargeable battery (15) according to Claim 4, **characterized in that** the rechargeable battery (15) is a rechargeable battery pack (18) comprising a plurality of rechargeable batteries (15) connected in series with one another.

6. Rechargeable battery (15) according to Claim 4 or 5, **characterized in that** the rechargeable battery (15) has a protective circuit (19).

7. Blower filter unit (20) for a blower filter system (30), the blower filter unit having a rechargeable battery (15) for supplying electrical power to the blower filter unit (20), **characterized in that** the rechargeable battery (15) is designed according to one of Claims 4 to 6.

8. Blower filter unit (20) according to Claim 6, **characterized in that** the electronic circuit (1) is arranged in the blower filter unit (20).

9. Method for charging a rechargeable battery (15) of a blower filter unit (20) by means of an electronic circuit (1) according to one of the preceding Claims 1 to 3, wherein the method is **characterized by** the following method steps:
a) the switching elements are switched in a high-impedance manner or to open when an absence of a charging current is identified, and
b) the switching elements are switched in a low-impedance manner or to closed when a presence of a charging current is identified.

## Revendications

1. Circuit électronique (1) pour charger un accumulateur (15) d'un appareil filtrant à ventilateur (20) qui peut être alimenté par une source d'énergie électrique externe et qui est configuré de telle sorte
a) que le circuit électronique (1) présente une première borne de charge (3) qui peut être reliée à un pôle positif (16) de l'accumulateur (15) par une première ligne électrique (4) et une seconde borne de charge (5) qui peut être reliée à un pôle négatif (17) de l'accumulateur (15) par une seconde ligne électrique (6),
b) que dans la première ligne (4) ou dans la seconde ligne (6) sont disposés plusieurs circuits parallèles (7) montés en série, composés chacun d'un élément résistif réalisé sous la forme d'une diode et d'un élément de commutation, chaque diode étant agencée de telle sorte que, pendant la charge de l'accumulateur, au moins une partie du courant de charge associé traverse la diode dans le sens passant,
c) que le circuit électrique (1) comprend un dispositif de mesure qui est réalisé pour mesurer un courant de charge à travers une des lignes (4, 6) ou une tension entre les bornes de charge (3, 5),
d) qu'il est prévu entre les éléments de commutation et le dispositif de mesure au moins un système de commande électronique (9) qui est réalisé pour recevoir un signal de mesure du dispositif de mesure et pour surveiller le courant circulant à travers les lignes (4, 6),
e) que l'électronique de commande (9) est réalisée de telle sorte qu'en l'absence d'un courant de charge, elle commute les éléments de commutation en haute impédance ou en position ouverte et
f) que l'électronique de commande (9) est réalisée de telle sorte qu'en présence d'un courant de charge, elle commute les éléments de commutation en basse impédance ou en position fermée.

2. Circuit électronique (1) selon l'une des revendications précédentes, **caractérisé en ce que** chaque élément de commutation est un MOS-FET.

3. Circuit électronique (1) selon l'une des revendications précédentes, **caractérisé en ce qu'**un fusible thermique (11) couplé thermiquement est monté dans la première ligne (4) ou la seconde ligne (6), en particulier entre deux éléments de commutation.

4. Accumulateur (15) destiné à l'alimentation électrique d'un appareil filtrant à ventilateur (20) qui peut être alimenté en une tension de charge par une source d'énergie électrique externe, l'accumulateur présentant un circuit électronique (1) destiné à charger l'accumulateur (15), **caractérisé en ce que** le circuit électronique (1) est réalisée selon l'une des revendications précédentes.

5. Accumulateur (15) selon la revendication 4, **caractérisé en ce que** l'accumulateur (15) est un bloc accumulateur (18) comportant plusieurs accumulateurs (15) montés en série les uns avec les autres.

6. Accumulateur (15) selon la revendication 4 ou 5, **caractérisé en ce que** l'accumulateur (15) présente un circuit de protection (19).

7. Appareil filtrant à ventilateur (20) pour un système filtrant à ventilateur (30), lequel appareil filtrant à ventilateur présente un accumulateur (15) pour l'alimentation électrique de l'appareil filtrant à ventilateur (20), **caractérisé en ce que** l'accumulateur (15) est réalisé selon l'une des revendications 4 à 6.

8. Appareil filtrant à ventilateur (20) selon la revendication 6, **caractérisé en ce que** le circuit électronique (1) est disposé dans l'appareil filtrant à ventilateur (20).

9. Procédé de charge d'un accumulateur (15) d'un appareil filtrant à ventilateur (20) au moyen d'un circuit électronique (1) selon l'une des revendications 1 à 3 précédentes, le procédé étant **caractérisé par** les étapes de procédé suivantes :
a) si une absence d'un courant de charge est déterminée, les éléments de commutation sont commutés en haute impédance ou en position ouverte et
b) si une présence d'un courant de charge est déterminée, les éléments de commutation sont commutés en basse impédance ou en en position fermée.
